# EUROPÄISCHE PATENTSCHRIFT

(11) **EP 0 902 303 B1**
(45) Veröffentlichungstag und Bekanntmachung des Hinweises auf die Patenterteilung: **02.01.2002**
(21) Anmeldenummer: 98116427.0
(22) Anmeldetag: 31.08.1998
(51) Int. Cl.: G01V 8/14

(54) **Anordnung zum Erkennen von vor einem Bedienelement eines Gerätes angebrachten Gegenständen**
Arrangement for detecting of objects present before an operating member of an apparatus
Dispositif pour la détection des objets avant un organe de commande d'une machine

(30) Priorität: 10.09.1997 DE 19739771
(43) Veröffentlichungstag der Anmeldung: 17.03.1999
(73) Patentinhaber: Wincor Nixdorf GmbH & Co KG, 33106 Paderborn (DE)
(72) Erfinder: Lutz, Bernhard, 33129 Delbrück (DE)

(56) Entgegenhaltungen:
- DE-A- 4 240 804
- FR-A- 2 588 385
- US-A- 4 175 231
- US-A- 4 958 067
- PATENT ABSTRACTS OF JAPAN vol. 018, no. 175 (P-1716), 24. März 1994 & JP 05 341132 A (FUJITSU LTD;OTHERS: 01), 24. Dezember 1993

## Beschreibung

Die Erfindung betrifft eine Anordnung zum Erkennen von Gegenständen, die vor einem Bedienelement eines elektronischen Gerätes, insbesondere vor einer Tastatur eines Selbstbedienungsgerätes angebracht werden können, nach dem Oberbegriff des Anspruchs 1.

Selbstbediente elektronische Geräte, insbesondere Automaten wie Geldausgabegeräte und Selbstbedienungsterminals unterliegen zunehmend Angriffen durch nicht autorisierte Benutzer, mit dem Ziel, unberechtigt Zugang zu den Leistungen des Automaten zu erlangen. Hierzu sind sogenannte "Vorbauten" bekannt geworden, bei denen beispielsweise vor einen Kartenleser eine Nachbildung eines Kartenleser-Mundstücks gesetzt wird, welche die Karte unberechtigterweise einbehält. Weiterhin wurde von Versuchen berichtet, persönliche Identifikationsnummern, sogenannte PIN-Nummern, auszuspähen, indem die PIN-Tastatur mit einer Sensoreinrichtung für Tastenbetätigungen überbaut wurde.

Es wurde deshalb bereits vorgeschlagen, lichtelektrische Sensoren in die Oberfläche der Geräte einzubauen, die bei Abdeckung durch einen "Vorbau" ein Signal auslösen, welches Bedienpersonal alarmiert und das Gerät deaktiviert. Dabei wird die Umgebungshelligkeit ausgenutzt oder für jeden Sensor nach der Art einer Lichtschranke ein Geber vorgesehen. Diese Anordnungen sind jedoch entweder nicht ausreichend betriebssicher oder bei einer großen Anzahl von Sensoren zu aufwendig.

In der deutschen Patentanmeldung 196 05 102.9 wurde auch bereits vorgeschlagen, in der Oberfläche des zu schützenden Gerätes Infrarot-Sensoren anzuordnen, die von einer intermittierend betriebenen Infrarot-Strahlungsquelle beaufschlagt werden. Mit dieser Anordnung ist eine zuverlässige Überbauerkennung gegeben. Es ist jedoch notwendig, die Infrarot-Sensoren von vornherein in die Geräteoberfläche einzusetzen; eine Nachrüstung eines dafür nicht vorbereiteten Gerätes ist mit vertretbarem Aufwand nicht möglich. Dies gilt insbesondere für die relativ großflächigen Tastaturen, die eine Vielzahl von Sensoren erfordern würden.

In der DE 42 40 804 A1 ist eine Einrichtung zum Erkennen der Lage und/oder zum Messen der Breite eines Aufzeichnungsträgers beschrieben, bei der ein fokussierter Lichtstrahl aus einer Lichtquelle über den Aufzeichnungsträger geführt wird. Beim Verlassen des Aufzeichnungsträgers trifft der Lichtstrahl auf einen Lichtwellenleiter, in dem er eine Fluoreszenzstrahlung auslöst. Diese wird von einem Fotodetektor erfaßt, dessen Ausgangssignal das Nichtvorhandensein eines Aufzeichnungsträgers an dem entsprechenden Ort signalisiert.

Aufgabe der Erfindung ist es, eine einfache Anordnung der genannten Art anzugeben, die für den Schutz von Bedienelementen, insbesondere von Tastaturen geeignet ist.

Diese Aufgabe wird dadurch die kennzeichnenden Merkmale des Anspruchs 1 gelöst.

Erfindungsgemäß wird eine das Bedienelement umgebende Gehäusefläche des Gerätes wenigstens teilweise von einer Lichtsammelplatte aus lichtdurchlässigem Material überdeckt. Die wenigstens auf einen Teil der Lichtsammelplatten-Oberfläche auftreffende Strahlung wird direkt oder als durch sie angeregte Fluoreszenzstrahlung in einen innerhalb der Lichtsammelplatte verlaufenden Strahlengang umgelenkt und von dem Sensor aufgenommen. Wird nun die Oberfläche der Lichtsammelplatte ganz oder zum Teil durch einen "Überbau" abgedeckt, verändert sich die Intensität der von dem Sensor aufgenommenen Strahlung, was als Indiz für die Anbringung eines unerlaubten "Überbaus" ausgewertet werden kann. Ein besonderer Vorteil der erfindungsgemäßen Anordnung ist darin zu sehen, daß sie nachträglich leicht und ohne mechanische Veränderung des elektronischen Gerätes an diesem angebracht werden kann. Dies kann beispielsweise durch Aufkleben der Lichtsammelplatte auf die das zu schützende Bedienelement umgebende Gehäusefläche erfolgen.

Auf die von dem Gerät wegweisende Fläche der Lichtsammelplatte ist senkrecht eine zweite Platte aufgesetzt, in die wenigstens ein Sensor eingelassen ist. Dabei ist die zweite Platte über einer Seitenkante der Lichtsammelplatte angeordnet, die auf der dem Gerät zugewandten Seite der Lichtsammelplatte eine um 45° gegenüber der Außenfläche angefaste Kante aufweist. Alternativ dazu ist die zweite Platte über einer keilförmigen Nut angeordnet, die in die dem Gerät zugewandte Fläche der Lichtsammelplatte eingelassen ist, wobei eine Nutwand mit der zweiten Platte einen Winkel von 45° einschließt. Die zweite um 45° schräggestellte Fläche dient -in an sich bekannter Weiseder Strahlumlenkung von der Lichtsammelplatte in die zweite Platte.

Gemäß einem ersten Ausführungsbeispiel der Erfindung weist die Lichtsammelplatte wenigstens eine auf die Lichtsammelplatte auftreffende Strahlung umlenkende Fläche auf, welche die Strahlung in einen Strahlenverlauf innerhalb der Lichtsammelplatte umlenkt. Die umlenkende Fläche kann beispielsweise dadurch gebildet sein, daß eine dem Gerät zugewandte Seite der Lichtsammelplatte eine um 45° angefaste Kante aufweist.

Gemäß einem zweiten Ausführungsbeispiel ist in die dem Gerät zugewandte Fläche der Lichtsammelplatte eine keilförmige Nut eingelassen, deren eine Nutwand mit der nach außen weisenden Fläche der Lichtsammelplatte einen Winkel von 45° einschließt. Die umlenkende Fläche kann entweder verspiegelt oder poliert sein. In beiden Fällen tritt an ihr eine Reflexion der Strahlung auf. Eine Anordnung gemäß diesen Ausführungsbeispielen ist besonders für schmale streifenförmige Lichtsammelplatten geeignet.

Gemäß einer anderen Ausführungsform der Erfindung ist die Lichtsammelplatte aus fluoreszierend eingefärbtem Acrylglas hergestellt. Auf ihre Oberfläche auftreffende Strahlung regt das Plattenmaterial zu einer Fluoreszenzstrahlung an, die aufgrund der Totalreflexion an den Plattenoberflächen innerhalb der Lichtsammelplatte verbleibt und an einer Seitenfläche aus dieser austritt. In diesem Fall kann auf eine strahlumlenkende Fläche verzichtet werden, die ganze Oberfläche der Lichtsammelplatte nimmt die auf sie auftreffende Strahlung auf und es kann mithin eine Abdeckung durch einen "Überbau" erfaßt werden.

Entsprechend zweier alternativer Weiterbildungen der Erfindung besteht die zweite Platte aus einem beliebigen, strahlungsundurchlässigen Material und weist einen Kanal für die Aufnahme des wenigstens einen Sensors auf, der von der Lichtsammelplatte ausgehend sich normal zur Oberfläche der Lichtsammelplatte erstreckt, oder die zweite Platte besteht aus strahlungsleitendem Material. In beiden Fällen gelangt die Strahlung nach ihrer Umlenkung durch die zweite um 45° schräggestellte Fläche auf den Sensor.

Die zweite Platte kann in besonders vorteilhafter Weise zugleich als eine auf einer Seite einer Tastatur angeordnete Sichtschutzwange dienen. Dazu ist zweckmäßigerweise auf beiden Seiten der Tastatur eine Sichtschutzwange anzubringen, von denen eine oder auch beide einen Sensor enthalten können.

Die beanspruchte Anordnung ist nicht ohne weiteres als Einrichtung zum Erkennen von unerlaubt angebrachten Gegenständen zu identifizieren. Dies wird noch gefördert, wenn als Lichtquelle eine unsichtbares Licht, insbesondere Infrarotlicht abgebende Strahlungsquelle verwendet wird. Das unsichtbare Licht kann als Dauerlicht abgestrahlt werden. Von besonderem Vorteil ist aber die Verwendung von gepulstem oder moduliertem Licht, da dieses von einer Auswertungselektronik mit darauf abgestimmter Durchlaßcharakteristik besonders leicht von der Srahlung aus anderen Lichtquellen zu unterscheiden ist. Dadurch wird die Erkennungssicherheit für "Überbauten" noch weiter erhöht.

Weitere Merkmale und Vorteile der Erfindung ergeben sich aus der folgenden Beschreibung, welche in Verbindung mit den beigefügten Zeichnungen die Erfindung an Hand von Ausführungsbeispielen erläutert. Es zeigt
- Fig. 1: eine Tastatur mit einer Anordnung zum Erkennen von Gegenständen gemäß einem ersten Ausführungsbeispiel in einer schematischen Schnittdarstellung,
- Fig. 2: eine Tastatur mit einer Anordnung zum Erkennen von Gegenständen gemäß einem zweiten Ausführungsbeispiel in einer schematischen Schnittdarstellung,
- Fig. 3: einen Ausschnitt aus einer Anordnung zum Erkennen von Gegenständen in einer schematischen Seitenansicht (technische Information, die nicht zur Erfindung gehört).

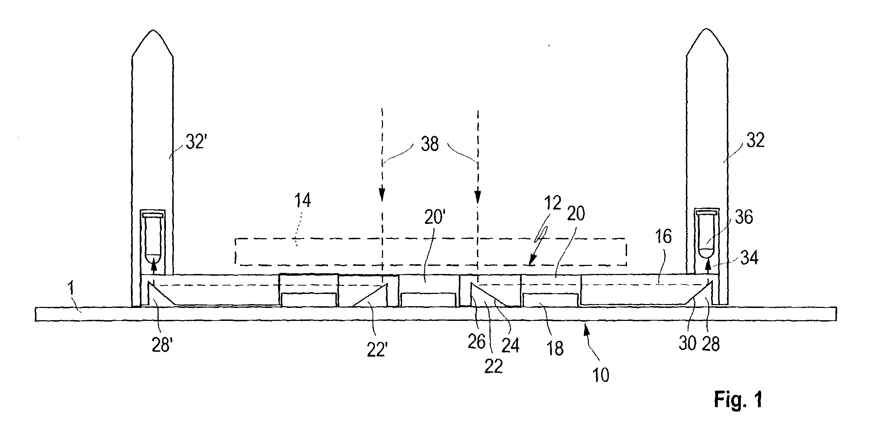

In Fig. 1 ist eine Bedienfläche 1 eines elektronischen Gerätes dargestellt, in die eine Tastatur 10 eingebaut ist. Auf die Bedienfläche 1 ist eine die Tastatur 10 umgebende Anordnung 12 zum Erkennen von Gegenständen 14 gemäß einem ersten Ausführungsbeispiel der Erfindung aufgesetzt.

Die Anordnung 12 enthält eine Lichtsammelplatte 16 aus lichtdurchlässigem Material, in die die Tastenknöpfe 18 der Tastatur 10 freilassende Durchbrüche 20 eingeformt sind. Rechts und links eines mittleren Durchbruchs 20' ist in die der Bedienfläche 1 zugekehrte Seite der Lichtsammelplatte 16 jeweils eine erste keilförmige Nut 22 bzw. 22' eingelassen, deren eine Nutwand 24 mit der von der Bedienfläche 1 wegweisenden äußeren Fläche der Lichtsammelplatte 16 einen Winkel von 45° einschließt und deren andere Nutwand 26 unter einem beliebigen Winkel geneigt sein kann.

Am in Fig. 1 rechten und linken Rand der Lichtsammelplatte 16 ist jeweils in deren der Bedienfläche 1 zugekehrte Seite eine zweite keilförmige Nut 28 bzw. 28' eingelassen, deren eine Nutwand 30 mit der von der Bedienfläche 1 wegweisenden Fläche der Lichtsammelplatte 16 wiederum einen Winkel von 45° einschließt. Die geneigten Nutwände 24, 30 der Nute 22, 28 bzw. 22', 28' sind einander zugewandt.

Auf die von der Bedienfläche 1 wegweisenden Fläche der Lichtsammelplatte 16 ist oberhalb der zweiten Nute 28, 28' jeweils eine zweite Platte 32, 32' aufgesetzt. In diese ist ein Kanal 34 eingeformt, der von der Lichtsammelplatte 16 ausgeht und sich normal zu deren Oberfläche erstreckt. In den Kanal 34 ist ein Strahlungssensor 36 eingebaut, der mit einer nicht dargestellten Meß- und Auswertungselektronik für Strahlungsintensität verbunden ist.

Die Anordnung 12 zur Erkennung von Gegenständen 14 arbeitet folgendermaßen: Eine nicht dargestellte Strahlungsquelle strahlt mittels direkter und indirekter, an der Decke eines Aufstellungsraumes des Gerätes reflektierter Strahlung 38 auf die Bedienfläche 1 des Gerätes. Die Srahlung 38 wird von der Lichtsammelplatte 16 aufgenommen und an der geneigten Nutwand 24 der ersten Nute 22 bzw. 22' in einen parallel zur Oberfläche der Lichtsammelplatte 16 gerichteten Strahlenverlauf umgelenkt. Die Strahlung 38 trifft schließlich auf die geneigte Nutwand 30 der zweiten Nute 28 bzw. 28', wo sie in Richtung der zweiten Platten 32 bzw. 32' umgelenkt wird und dort auf die Strahlungssensoren 36 auftrifft. Ist nun ein Gegenstand 14 wie z.B. ein unzulässiger Überbau auf die Tastatur 10 aufgesetzt, wird die Strahlung 38 durch diesen wenigstens zum Teil von der Lichtsammelplatte 16 ferngehalten. Diese Verminderung der Strahlungsintensität wird von dem Strahlungssensor 36 erfaßt und von der Meß- und Auswertungselektronik gemeldet.

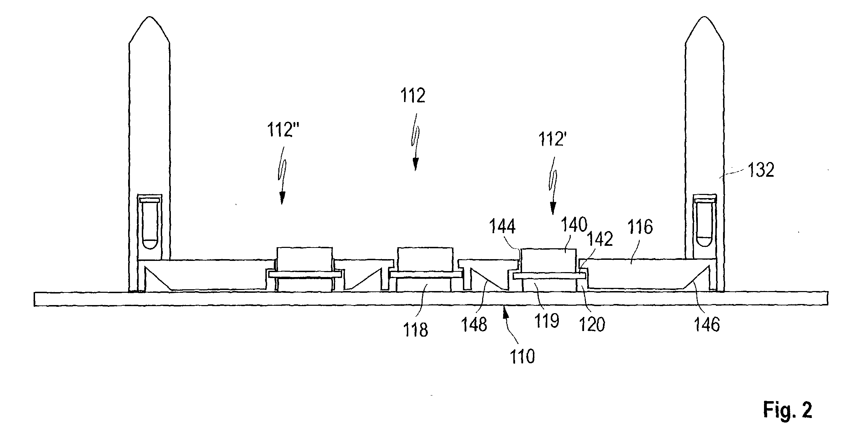

In Fig. 2 ist wiederum eine Bedienfläche 1 eines elektronischen Gerätes dargestellt, in die eine Tastatur 10 eingebaut ist. Auf die Bedienfläche 1 ist eine die Tastatur 10 umgebende Anordnung 112 zum Erkennen von Gegenständen gemäß einem zweiten Ausführungsbeispiel der Erfindung aufgesetzt.

Die Anordnung 112 besteht aus zwei Teil-Anordnungen 112', 112", die bei einer mittleren Tastenknopf-Reihe 118 aneinandestoßen. Beide Teil-Anordnungen 112', 112" sind spiegelgleich aufgebaut, weshalb nachfolgend nur eine Teilanordnung beschrieben wird. Sie enthält eine Lichtsammelplatte 116 aus lichtdurchlässigem Material, in die die Tastenknöpfe 119 der Tastatur 110 freilassende Durchbrüche 120 eingeformt sind. Auf jeden Tastenknopf 119 ist ein Stössel 140 aufgesetzt, der den darüber befindlichen Durchbruch 120 durchsetzt. An die auf dem Tastenknopf 119 aufliegende Seite des Stössels 140 ist ein Kragen 142 angeformt, der an dem Rand eines im Querschnitt verkleinerten Abschnitts 144 des Durchbruchs 120 anliegt und so den Stössel 140 unverlierbar in dem Durchbruch 120 hält.

Die in Fig. 2 äußere Seitenkante 146 und die bei der mittleren Tastenreihe 118 befindliche Seitenkante 148 der Lichtsammelplatte 116 sind derart angefast, daß sie mit der von der Bedienfläche 1 wegweisenden Fläche der Lichtsammelplatte 116 jeweils einen Winkel von 45° einschließen. Die geneigten Flächen der Seitenkanten 146, 148 sind einander zugewandt. Oberhalb der geneigten Fläche der nach außen weisenden Seitenkante 146 ist eine der zweiten Seitenplatte 32, 32' im Ausführungsbeispiel nach Fig. 1 entsprechende zweite Seitenplatte 132 angeordnet.

Die Anordnung nach Fig. 2 hat neben der Unverlierbarkeit der Stössel 140 gegenüber der nach Fig. 1 den Vorteil, daß eine Fase an der Kante der Lichtsammelplatte einfacher herzustellen ist als eine Nut in dieser. Die Wirkungsweise entspricht der oben beschriebenen.

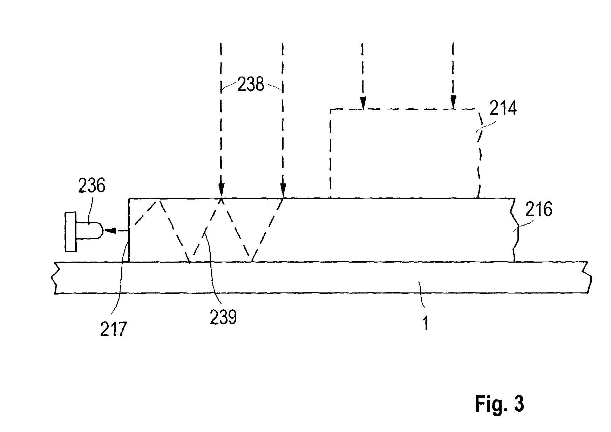

Fig. 3 ist lediglich zur Information angegeben worden und gehört nicht zur beanspruchten Erfindung. Sie zeigt eine Lichtsammelplatte 216 aus fluoreszierend eingefärbtem Acrylglas, beispielsweise Plexiglas GS der Fa. Röhm GmbH, Darmstadt, verwendet wird. Auf die Oberfläche der Lichtsammelplatte 216 auftreffende Strahlung 238 regt in dieser eine Fluoreszenzstrahlung 239 an, die an einer Seitenkante 217 der Lichtsammelplatte 216 austritt und auf einen für die Frequenz der Fluoreszenzstrahlung 219 empfindlichen Sensor 236 fällt. Diese Anordnung hat gegenüber den Ausführungsbeispielen nach Fig. 1 und 2 den Vorteil, daß die gesamte Oberfläche der Lichtsammelplatte 216 sensibel für Überbauten ist. Ein die Strahlung 238 auch nur teilweise abschirmender Gegenstand 214 schwächt die Fluoreszenzstrahlung 239. Die Lichtsammelplatte 216 kann mit Durchbrüchen 20 nach Fig. 1 oder 120 nach Fig. 2 versehen sein. Auch kann auf sie eine zweite Platte 32 (Fig. 1) oder 132 (Fig. 2) aufgesetzt werden. In diesem Fall muß unter ihr eine strahlungsumlenkende Fläche entsprechend der geneigten Nutwand 30 (Fig. 1) oder der angefasten Seitenkante 146 (Fig. 2) vorgesehen werden.

Selbstverständlich kann auch die Anordnung 12 des Ausführungsbeispiels nach Fig. 1 mit Stösseln 140 oder die Anordnung 112 des Ausführungsbeispiels nach Fig. 2 mit einfachen Durchbrüchen 20 oberhalb der Tastenknöpfe 118 versehen sein.

### Bezugszeichenliste

- 1: Bedienfläche
- 10: Tastatur
- 12: Anordnung (zum Erkennen von Gegenständen)
- 14: Gegenstand
- 16: Lichtsammelplatte
- 18: Tastenknopf
- 20: Durchbruch
- 20': mittlerer Durchbruch
- 22: erste Nut
- 24: geneigte Nutwand von 22
- 26: andere Nutwand von 22
- 28: zweite Nut
- 30: geneigte Nutwand von 28
- 32: zweite Platte
- 34: Kanal
- 36: Strahlungssensor
- 38: Strahlung
- 110: Tastatur
- 112: Anordnung (zum Erkennen von Gegenständen)
- 116: Lichtsammelplatte
- 118: mittlere Tastenknopfreihe
- 119: Tastenknopf
- 120: Durchbruch
- 132: zweite Platte
- 140: Stössel
- 142: Kragen
- 144: Abschnitt von 120
- 146: Seitenkante
- 148: Seitenkante

- 214: Gegenstand
- 216: Lichtsammelplatte
- 236: Strahlungssensor
- 238: Strahlung
- 239: Fluoreszenzstrahlung

## Patentansprüche

1. Anordnung (12) zum Erkennen von Gegenständen (14, 214), die vor einem Bedienelement eines elektronischen Gerätes, insbesondere vor einer Tastatur (10, 110) eines Selbstbedienungsgerätes angebracht werden können, umfassend wenigstens einen optischen Sensor (36, 236) , der dazu bestimmt ist, die Strahlung (38, 238) einer Lichtquelle zu empfangen, wobei ein vor das Bedienelement (10, 110) gebrachter Gegenstand (14, 214) die Intensität der auf den Sensor (36, 236) treffenden Strahlung (38, 239) mindert,
**dadurch gekennzeichnet,**
**daß** eine das Bedienelement (10, 110) umgebende Gehäusefläche (1) des Gerätes wenigstens teilweise von einer Lichtsammelplatte (16, 116, 216) aus lichtdurchlässigem Material überdeckt ist,
**daß** die wenigstens auf einen Teil der Oberfläche der Lichtsammelplatte (16, 116, 216) auftreffende Strahlung (38, 238) direkt oder als durch sie angeregte Fluoreszenzstrahlung (239) in einen innerhalb der Lichtsammelplatte (16, 116, 216) verlaufenden Strahlengang umgelenkt wird,
**daß** der Sensor (36, 236) derart an der Lichtsammelplatte (16, 116, 216) angeordnet ist, daß er in letzterer verlaufende Strahlung (38, 239) aufzunehmen vermag,
und **daß** auf die von dem Gerät wegweisende Fläche der Lichtsammelplatte (16, 116) eine zweite, von dieser abstehende Platte (32, 132) aufgesetzt ist, in die der wenigstens eine Sensor (36) eingelassen ist und in deren Richtung die in der Lichtsammelplatte (16, 116) verlaufende Strahlung (38) umgelenkt wird, wozu die zweite Platte (132) über einer Seitenkante (146) der Lichtsammelplatte (116) angeordnet ist, die auf der dem Gerät zugewandten Seite der Lichtsammelplatte (116) eine um 45° angefaste Kante aufweist,
oder die zweite Platte (32) über einer keilförmigen Nut (28) angeordnet ist, die in die Lichtsammelplatte (16) eingelassen ist, wobei eine Nutwand (30) der Nut (28) mit der zweiten Platte (32) einen Winkel von 45° einschließt.

2. Anordnung nach Anspruch 1, **dadurch gekennzeichnet, daß** die Lichtsammelplatte wenigstens eine auf die Lichtsammelplatte auftreffende Strahlung umlenkende Fläche aufweist, welche die Strahlung in den Strahlenverlauf innerhalb der Lichtsammelplatte umlenkt.

3. Anordnung nach Anspruch 2, **dadurch gekennzeichnet, daß** die dem Gerät zugewandte Seite der Lichtsammelplatte (116) eine um 45° angefaste Kante (148) aufweist oder daß in ihre dem Gerät zugewandte Fläche eine keilförmige Nut (22) eingelassen ist, deren eine Nutwand (24) mit der nach außen weisenden Fläche der Lichtsammelplatte (16) einen Winkel von 45° einschließt.

4. Anordnung nach Anspruch 1, **dadurch gekennzeichnet, daß** die Lichtsammelplatte (216) aus fluoreszierend eingefärbtem Acrylglas hergestellt ist.

5. Anordnung nach einem der Ansprüche 1 bis 4, **dadurch gekennzeichnet, daß** die zweite Platte (32) einen Kanal (34) für die Aufnahme des wenigstens einen Sensors (36) aufweist, der von der Lichtsammelplatte (16) ausgehend sich normal zur Oberfläche der Lichtsammelplatte (16) erstreckt.

6. Anordnung nach einem der Ansprüche 1 bis 5, **dadurch gekennzeichnet, daß** die zweite Platte aus strahlungsleitendem Material besteht.

7. Anordnung nach einem der Ansprüche 1 bis 6, **dadurch gekennzeichnet, daß** die zweite Platte eine auf einer Seite einer Tastatur angeordnete Sichtschutzwange (32, 132) ist.

8. Anordnung nach einem der vorhergehenden Ansprüche, **dadurch gekennzeichnet, daß** die Lichtquelle eine Dauerlicht, moduliertes Licht oder Lichtimpulse abgebende Infrarotlicht-Quelle ist.

## Claims

1. Arrangement (12) for detecting objects (14, 214) which can be brought in front of an operating element of an electronic apparatus, in particular in front of a keyboard (10, 110) of a self service apparatus, comprising at least one optical sensor (36, 236), which is intended for receiving the radiation (38, 238) from a light source, an object (14, 214) brought in front of the operating element (10, 110) reducing the intensity of the radiation (38, 239) striking the sensor (36, 236), **characterized in that** a housing surface (1), surrounding the operating element (10, 110), of the apparatus is covered at least partially by a light gathering plate (16, 116, 216) made from transparent material, **in that** the radiation (38, 238) striking at least one part of the surface of the light gathering plate (16, 116, 216) is deflected directly or as fluorescent radiation (239) excited by it into a beam path running inside the light gathering plate (16, 116, 216), **in that** the sensor (36, 236) is arranged on the light gathering plate (16, 116, 216) in such a way that it is capable of picking up radiation (38, 239) running in said plate, and **in that** placed onto the surface of the light gathering plate (16, 116) pointing away from the apparatus is a second plate (32, 132), which projects from said plate, into which at least one sensor (36) is inserted, and in whose direction the radiation (38) running in the light gathering plate (16, 116) is deflected, for which purpose the second plate (132) is arranged over a lateral edge (146) of the light gathering plate (116) which has an edge chamfered by 45° on the side of the light gathering plate (116) facing the apparatus, or the second plate (32) is arranged over a wedge-shaped groove (28) which is recessed into the light gathering plate (16), a groove wall (30) of the groove (28) enclosing an angle of 45° with the second plate (32).

2. Arrangement according to Claim 1, **characterized in that** the light gathering plate has at least one surface which deflects radiation striking the light gathering plate and deflects the radiation into the course of the beam inside the light gathering plate.

3. Arrangement according to Claim 2, **characterized in that** the side of the light gathering plate (116) facing the apparatus has an edge (148) chamfered by 45°, or **in that** a wedge-shaped groove (22) whose one groove wall (24) encloses an angle of 45° with the outwardly facing surface of the light gathering plate (16) is recessed into the surface of said plate facing the apparatus.

4. Arrangement according to Claim 1, **characterized in that** the light gathering plate (216) is produced from fluorescing dyed flexiglass.

5. Arrangement according to one of Claims 1 to 4, **characterized in that** the second plate (32) has a channel (34) for holding the at least one sensor (36) which, starting from the light gathering plate (16), extends at right angles to the surface of the light gathering plate (16).

6. Arrangement according to one of Claims 1 to 5, **characterized in that** the second plate consists of radiation-conducting material.

7. Arrangement according to one of Claims 1 to 6, **characterized in that** the second plate is a visual protection cheek (32, 132) arranged on one side of a keyboard.

8. Arrangement according to one of the preceding claims, **characterized in that** the light source is an infrared light source emitting continuous light, modulated light or light pulses.

## Revendications

1. Dispositif (12) de reconnaissance d'objets (14, 214), qui peuvent être placés devant un élément de commande d'un appareil électronique, notamment devant un clavier (10, 110) d'un appareil de libre service, comprenant au moins un capteur (36, 236) optique qui est prévu pour recevoir le rayonnement (38, 238) d'une source lumineuse, un objet (14, 214) placé devant l'élément (10, 110) de commande diminuant l'intensité du rayonnement (38, 239) arrivant sur le capteur (36, 236),
**caractérisé**
**en ce qu'**une surface (1) du boîtier de l'appareil entourant l'élément (10, 110) de commande est recouverte au moins en partie par une plaque (16, 116, 216) collectrice de lumière en matériau transparent à la lumière,
**en ce que** le rayonnement (38, 238) arrivant au moins sur une partie de la surface de la plaque (16, 116, 216) collectrice de lumière est dévié directement ou en tant que rayonnement (239) fluorescent provoqué par celle-ci vers une marche des rayons s'étendant à l'intérieur de la plaque (16, 116, 216) collectrice de lumière,
**en ce que** le capteur (36, 236) est monté sur la plaque (16, 116, 216) collectrice de lumière de telle manière qu'il peut recevoir un rayonnement (38, 239) s'étendant dans cette dernière,
et **en ce qu'**il est placé sur la face de la plaque (16, 116) collectrice de lumière éloignée de l'appareil une deuxième plaque (32, 132) en saillie de celle-ci dans laquelle le au moins un capteur (36) est encastré et dans la direction de laquelle le rayonnement (38) s'étendant dans la plaque (16, 116) collectrice de lumière est dévié, la deuxième plaque (132) étant montée à cet effet au-dessus d'un bord (146) latéral de la plaque (116) collectrice de lumière qui comporte du côté de la plaque (116) collectrice de lumière tournée vers l'appareil un bord biseauté à 45°,
ou la deuxième plaque (32) est disposée au-dessus d'une rainure (28) cunéiforme qui est ménagée dans la plaque (16) collectrice de lumière, une paroi (30) de la rainure (28) faisant un angle de 45° avec la deuxième plaque (32).

2. Dispositif suivant la revendication 1, **caractérisé en ce que** la plaque collectrice de lumière comporte au moins une surface qui dévie un rayonnement arrivant sur la plaque collectrice et qui dévie le rayonnement vers la marche des rayons à l'intérieur de la plaque collectrice de lumière.

3. Dispositif suivant la revendication 2, **caractérisé en ce que** le côté de la plaque (116) collectrice de lumière tourné vers l'appareil comporte un bord (148) biseauté à 45° ou **en ce qu'**il est ménagé dans sa face toumée vers l'appareil une rainure (22) cunéiforme dont une paroi (24) de rainure fait un angle de 45° avec la surface de la plaque (16) collectrice de lumière tournée vers l'extérieur.

4. Dispositif suivant la revendication 1, **caractérisé en ce que** la plaque (216) collectrice de lumière est fabriquée en verre acrylique de couleur fluorescente.

5. Dispositif suivant l'une des revendications 1 à 4, **caractérisé en ce que** la deuxième plaque (32) comporte un canal (34) pour la réception du moins un capteur (36) qui s'étend de la plaque (16) collectrice de lumière perpendiculairement jusqu'à la surface de la plaque (16) collectrice de lumière.

6. Dispositif suivant l'une des revendications 1 à 5, **caractérisé en ce que** la deuxième plaque est en un matériau conducteur du rayonnement.

7. Dispositif suivant l'une des revendications 1 à 6, **caractérisé en ce que** la deuxième plaque est une joue (32, 132) de protection visuelle disposée d'un côté d'un clavier.

8. Dispositif suivant l'une des revendications précédentes,
**caractérisé en ce que** la source lumineuse est une source de lumière infrarouge foumissant une lumière ininterrompue, une lumière modulée ou des impulsions lumineuses.
